Europäisches Patentamt

European Patent Office

Office européen des brevets

(19)

(11) Publication number: **0 076 408 B1**

# EUROPEAN PATENT SPECIFICATION

(12)

(45) Date of publication of patent specification: **13.11.91**   (51) Int. Cl.⁵: **G06F 15/16**

(21) Application number: **82108587.5**

(22) Date of filing: **17.09.82**

(54) **Functional addressing method for a multiplexed data bus.**

(30) Priority: **02.10.81 US 307970**

(43) Date of publication of application:
**13.04.83 Bulletin 83/15**

(45) Publication of the grant of the patent:
**13.11.91 Bulletin 91/46**

(84) Designated Contracting States:
**DE FR GB IT NL SE**

(56) References cited:
**EP-A- 0 036 766**

**IBM TECHNICAL DISCLOSURE BULLETIN, vol. 23, no. 5, October 1980, pages 1811-1812, New York, USA; J.G. SAMS: "Node processor for distributed system control"**

(73) Proprietor: **Hughes Aircraft Company**
**7200 Hughes Terrace P.O. Box 45066**
**Los Angeles, California 90045-0066(US)**

(72) Inventor: **Swaney, Richard E.**
**1700 Shady Brook Dr.**
**Fullerton, California 92631(US)**

(74) Representative: **Kuhnen, Wacker & Partner**
**Schneggstrasse 3-5 Postfach 1553**
**W-8050 Freising(DE)**

## Description

### BACKGROUND OF THE INVENTION

The present invention relates generally to multiplexed data buses, and more particularly, to a functional addressing method for use with a multiplexed data bus which employs a single signal to control the operation of systems attached thereto.

In present ground command, control, communications, and intelligence information systems, the traditional hierarchical architecture under control of a central computer results in an inflexible system configuration. A large percentage of the development, procurement, and maintenance costs of such systems are attributable to interface circuitry, cables, and connectors, and the like. Typical system specifications require a system architecture capable of continued operation during the failure and repair of individual units, and during operational reconfiguration of the system. This necessitates an interconnect structure containing no critical nodes or central control elements. These requirments may be met by utilizing an interconnect system employing a data bus which is shared by all units and which comprises a standard bus interface in each unit.

In a conventional large scale system, the interconnection of computers, processors, displays, and peripheral units requires a unique hierarchical arrangement where the function of a unit is determined by its position in the interconnecting topology. Moreover, the associated interfaces of any one type of unit would change, depending on its location in the topology. The conventional system contains a central computer connected to minicomputers through interface units, which in turn communicate with peripherals, displays and communication equipment by way of specialized controllers.

To ensure continuous operation when unit failures occur, the conventional system is redundant, in that a plurality of complete systems are provided to compensate for unit failure. As the number of units in the system increases, the number of point to point interconnections increases at a greater rate and so do the neceassary interface units, cards, and cables. The configuration of the interconnecting elements in the topology may vary from system to system, and hence integration of these various systems is most complex.

To circumvent some of the problems associated with this conventional type of system, a single multiplexed data bus may be employed interconnecting each of the units in the system. The central computer may be eliminated by utilizing distributed processing. The computer units are required to interface only with the data bus. Any computer may perform any role in the system since each computer is connected directly to all other computers, peripherals and displays by way of the multiplexed data bus. Continued operation during the failure of a unit only requires an additional backup unit. The result is reduction in the types and numbers of units in the system, and the number of interface cards per unit. As a result, acquisition and life cycle costs are reduced because inventory and maintenance requirements are alleviated.

The routing of messages between units coupled to the data bus is an important design consideration when attempting to arrive at a high-speed data bus. All known prior art data bus designs have employed physical addressing techniques to route messages from unit to unit. This physical addressing procedure requires all originating units on the bus to maintain a logical-to-physical relationship of the entire system. Any change in system role or resources required manual action to reallocate functions to equipment and to set up the new logical-to-physical relationship between all units. Typically, a set of manual switches was used to control the identification of a particular unit, and manual manipulation of the switches was required to modify the logical-to-physical relationship between units.

In IBM Technical Disclosure Bulletin, Vol. 23, No. 5, October 1980, pages 1811 - 1812, New York, USA; J.G. SAMS: "Node Processor for Distributed System Control", a node processor for use in a distributed data processing system is described, utilizing data messages which are addressed to the different processors by their process names.

The node processor accomplishes process name recognition and provides message acceptance and routing functions by employing a storage array. The names in this storage array are continually accessed in a cyclic manner by means of an oscillator and an address counter. In this arrangement, the process names are supplied one at a time, in a sequential manner, to a comparator. The process name list is scanned over and over in a continuous manner. An input buffer receives messages from the communication network. The name field of the message is trnsferred to a name register which is also coupled to the comparator. If a match is obtained in the comparator with one of the names from the storage array, a switching logic circuit is operated to transfer the network input message from the network input buffer to a local process input queue. While not shown, the message is then directed from the local process input queue to the named process which is resident in the local processor. If there is no match of the name field of the message received from the communication network with any of the names on the list in the storage array, the switching logic circuit transfers the network messages from the network input buffer to a network output buffer which passes the message back to the communication network for persual by other local processors connected to the network.

Provision is also made for handling inter-process messages from the local processor. Messages from the loc al processor are read into a local send buffer and the name field is supplied to the name register. Here again, the name field is compared in the comparator with the process names supplied by the storage array. If a name match occurs, the switching logic circuit switches the messages into the input queue for the local processor. If no name match is obtained, then the switching logic circuit transfers the message from the local send buffer to the network output buffer and from there to the communication network.

The process name recognition is performed in each of the connected units one after the other. The message is removed from the network and read into a buffer and the name field of the message is transferred into a name register. Then, the process names are compared sequentially one at a time with process names stored in a storage array. Depending on the result of the comparison, the message is transferred via a switch logic and a queue to the local processor. Since the data messages are handed over from one unit to the other and since within one unit, the function code recognition process is achieved by scanning the function code storage array via a counter, the negative impact on the data transmission speed is evident.

From EP-A-0 036 766, a computer system and interface therefore is known. Said system utilizes a data transfer bus to couple data processors, memories and input/output devices. It operates by transmitting and receiving complete transaction codes, fully identifying the target device and including a process code. The data processor's memories and the input/output devices are coupled to the bus by interfaces. The complete data transaction preferrably occurs during one clock period, but four additional clock periods are used to complete a bus transaction involving arbitration, match recognition, data validation and acknowledgement of receipt. The transaction code includes a sender code, a target code, a process code, transaction-transfer-type code, device address codes and a data code. Process code, device address code and transaction-transfer-type code can be considered as individual addresses which, in each transaction, collectively present a total or global address for the entire transaction. Thus, said system is one of the logical-to-physical relationship type units mentioned above. Therefore, it would be an advance in the data transmission art to provide a method of functional addressing which eliminates the need for the logical-to-physical relationship between units coupled to a data bus. It would also be an advance in the data transmission art to provide a method of functional addressing which eliminates the manual switch-setting function to identify the units.

It would be a further advance in the data transmission art to provide a method of functional addressing which supports the use of distributed processing concepts applied to a multiplexed data bus that allows for modification of the system configuration at any time and provides for high data transmission speed.

These and other objects are achieved by a method according to claim 1 and an apparatus according to claim 3.

In order to overcome the above-mentioned problems associated with conventional systems, the present invention provides for a method of routing messages between a plurality of data processing units coupled to a data bus which comprises the following steps. A unit which intends to transmit a message generates a function code which is a portion of the message. The unit then transmits the message containing the code over the data bus. The message is then received by a bus interface portion of all the other units. Each of the bus interfaces then compares the received code to set of a predetermined codes associated with its unit. If the received code matches any of the predetermined codes, then the bus interface accepts the message and passes the message to its unit. However, if the received code does not match any of the predetermined codes, then the bus interface disregards the receive message, thereby preventing its unit from receiving the message. In this way, only the unit or units which requires the data receives it from the bus.

The functional addressing method allows for routing of information over the data bus in a manner which provides for system flexiblity, without manual allocation of functions to the equipment coupled to the data bus. In addition, the functional addressing technique of the present invention does not require a manual set-up to maintain a logical-to-physical relationship between the various units coupled to the data bus.

In particular, the functional addressing technique employs a 12-bit function code in the first word of each message which addresses a 4096 by 1 bit random access memory (RAM) to determine if the message should be accepted. The design permits each addressee to recognize any combination of up to 4096 addresses.

Functional addressing allows software modules to communicate with other software modules without knowing the physical location where the module resides. Peripheral equipment, such as a digital communication interface unit, may route received messages to the appropriate software module without knowing which computer processes the data. By appropriate control of the function codes associated with each unit, messages may be received by any set of units having the need for such information. Functional addressing supports automatic reallocation of functions by allowing the function allocating computer to re-direct messages to other units for processing by changing the contents of the function code RAM in each bus interface.

The present invention also provides for a method which allows the memory to be changed or updated by means of the function code. The contents of the memory may be changed by transmitting a control word containing a function code indicative of a write operation of the memory. The write operation updates the contents of the memory with new routing information. Thus, different functional addresses control which units receive messages as indicated in the updated contents of the memory.

## BRIEF DESCRIPTION OF THE DRAWINGS

The various features and advantages of the present invention may be more readily understood with reference to the following detailed description taken in conjunction with the accompanying drawings, wherein like reference numerals designate like structural elements, and in which:

FIG. 1 illustrates a serial multiplexed data bus system which may employ the principles of the present invention;

FIG. 2 illustrates the concept of functional addressing;

FIG. 3 illustrates a typical bus interface;

FIG. 4 illustrates the operation of the functional addressing method of the present invention; and

FIG. 5 is a flow diagram illustrating the functional addressing method of the present invention.

## DETAILED DESCRIPTION OF THE INVENTION

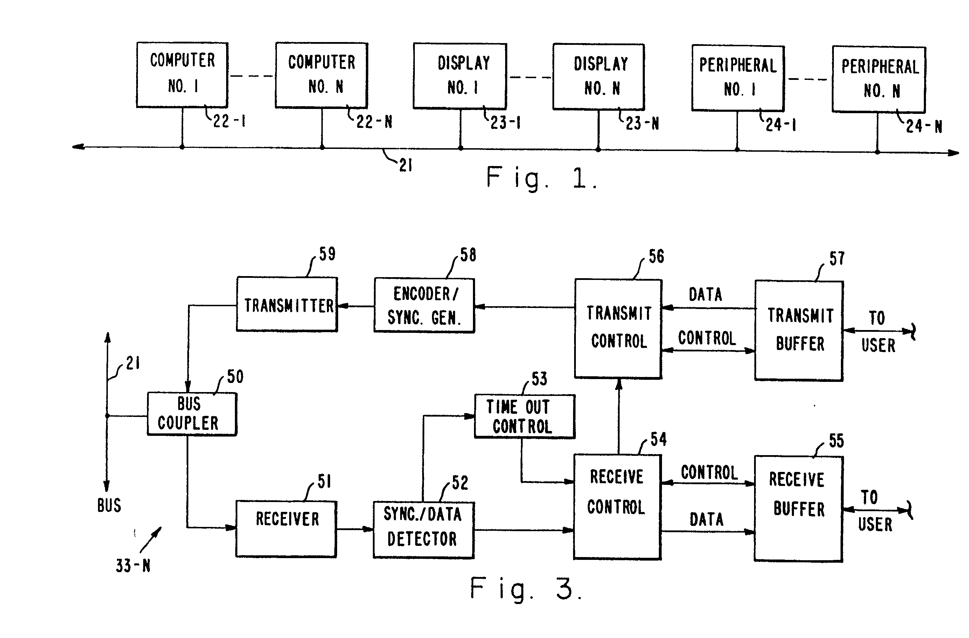

Referring to FIG. 1 there is shown a multiplexed data bus in which the present invention may be employed. The system includes a serial data bus 21 to which is coupled a plurality of units, such as computers, displays, and peripherals. For example, a plurality of computers 22-1, ... 22-N, a plurality of displays 23-1, ... 23-N, and a plurality of peripherals 24-1 ... 24-N may be connected to the data bus 21. The data bus 21 may be a typical coaxial or triaxial cable with a center conductor surrounded by one or two grounded shields and appropriate transformer couplings provided in order to connect the computers, displays, and peripherals thereto. The computers 22 connected to the data bus 21 may be of the same or dissimilar type. The displays 23 may be text, graphics, or large screen, on the like. The peripherals 24 include such items as terminals (CRT/keyboards), modems, printers, discs, and magnetic tapes, or the like.

Each of the units connected to the data bus 21 transmits information along the bus 21 to one or more of the other units. For example, the first computer 22-1 may transmit information to any of the other computers coupled to the bus 21, or transmit information to a peripheral 24, or any one or more of the displays 23. The transmitting unit places a message on the bus 21 with a function code which addresses the function or process to be performed on the data in the message. The unit performing this function or process automatically receives the data because its bus interface is set to extract that kind of message. This will be discussed in more detail hereinbelow.

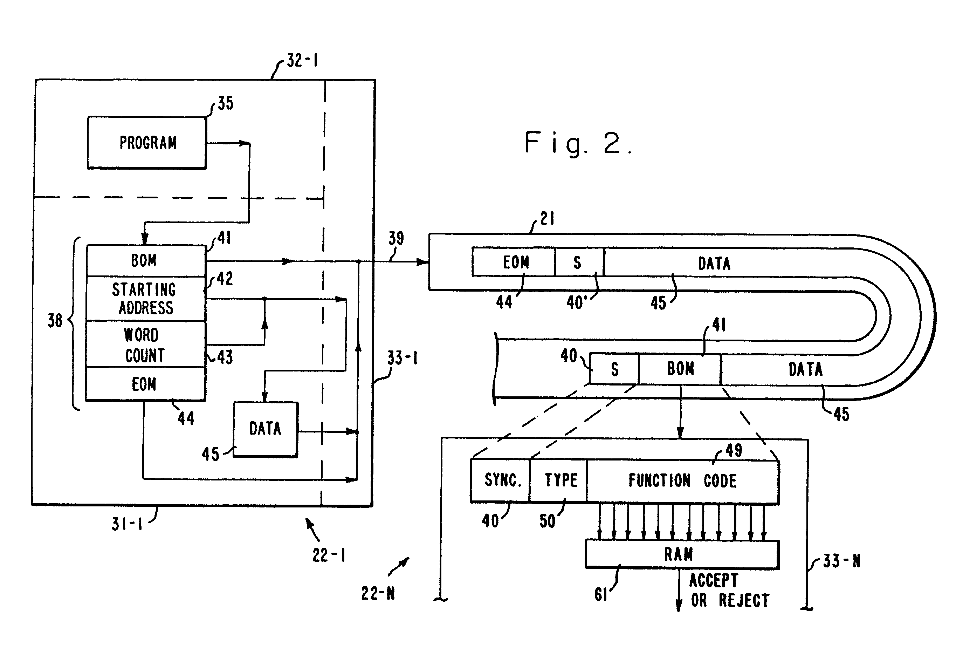

Referring to FIG. 2, there is shown a diagram which illustrates functional addressing. A computer, for example, such as the first computer 22-1, is comprised of a memory 31-1, processor 32-1 and bus interface 33-1. A processor 32-1 executes a program 35, and an input/output instruction gives the bus interface 33-1 the location of where an output control block 38 is stored in memory 31-1. When the bus interface 33-1 transmits a message on the data bus 21, the message starts with a sync pulse 40, followed by a beginning of message word 41, data words 45, another sync pulse 40', and an end of message word 44. An output control section of the bus interface 33-1 retrieves the beginning of message word 41 from the output control block 38 to form the first portion of the message. Next, the bus interface 33-1 retrieves from the output control block 38 the starting address 42 which indicates where the data words 45 are stored in the memory 33-1 and how many data words (word count 43) should be transmitted. Following the beginning of message word 41, the bus interface 33-1 retrieves the data words 45 from the memory 33-1. Finally, the bus interface 33-1 retrieves the end of message word 44 from the output control block 38 to form the last portion of the message.

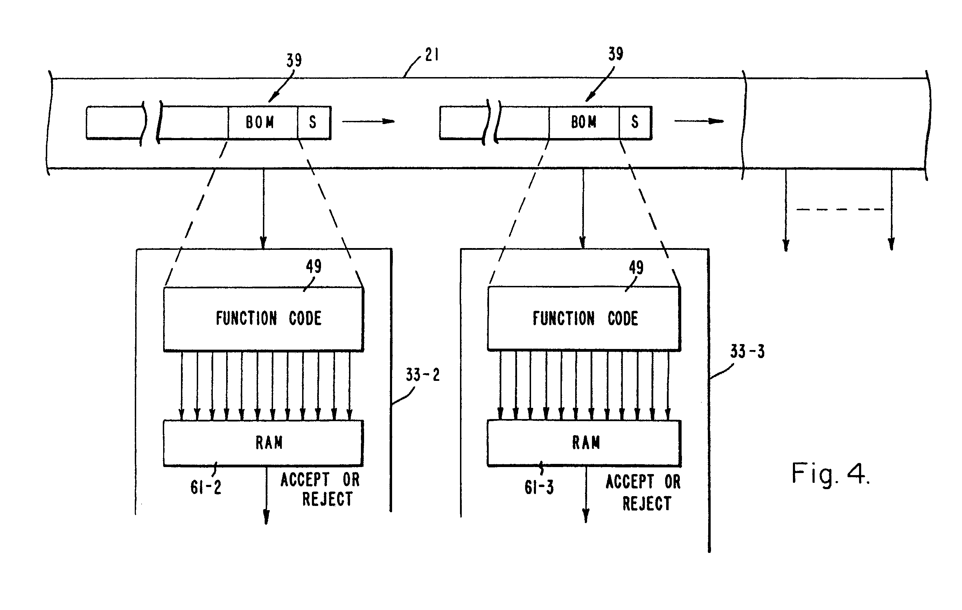

The composite message 39 is received by all bus interfaces which determine if attached unit is to accept the transmitted data contained therein. FIG. 3 shows a block diagram of a typical bus interface 33-N. The bus interface 33-N is coupled to the transmission line of the data bus 21 through a bus coupler 50, which is generally comprised of an isolation transformer which presents a high impedance, short stub to the transmission line. The bus interface 33-N is split into two basic portions, receiver portion and transmitter portion. The bus coupler 50 is connected to a receiver 51 which allows the receiver 51 to sense signals as they propagate past the coupler 50 on the data bus 21. The sensed signal is amplified and conditioned by the receiver 51 and applied to the sync/data detector 52. The presence of a sync pulse in an incoming signal is detected by sync/data detector 52 which converts the bits of information following the sync pulse from an encoded waveform to a decoded serial bit stream. A serial-to-parallel converter in the sync/data detector 52 converts the serial bit stream into parallel words which are presented to receive control circuitry 54 for interpretation.

The receive control 54 distinguishes control words from data words and decodes control words. If the control word is a beginning of message word, the receive control circuitry 54 determines whether to accept or reject the message. The sync detector 52 is also coupled to timeout control circuitry 53 and provides a signal indicative of when units are transmitting over the bus. The timeout control circuitry 53 monitors the data bus 21 for time periods when the bus is inactive, and provides appropriate signals to the receive control circuitry 54.

The transmitter portion of the bus interface comprises transmit control circuitry 56 and transmit buffer circuitry 57 which controls the data flow from the user. An encoder/sync generator 58 converts parallel words from the user into a serial bit stream, encodes the waveform of the bit stream, and interjects sync pulses into the signals to be transmitted. The output of the encoder/sync generator 58 is connected through a transmitter 59 to the bus. The transmitter 59 transmits the signal over the data bus 21 by way of the bus coupler 50.

The method of the present invention is implemented in the receive control circuitry 54. The receive control circuitry 54 maintains one or more receive addresses and compares the message address of all received messages against its receive address(es) to determine whether to accept or reject the message. When a message is accepted, the receive control circuitry 54 controls the flow of the data words to the user (computer, terminal, etc.) through receive buffer circuitry 55.

Referring again to FIG. 2, in order to determine whether the data 45 is to be accepted by the unit 22-N, the beginning portion of the composite message 39 is comprised of the sync pulse 40, followed by a beginning of message word 41 which includes a function code 49 and word type code 50. The function code is a 12-bit word having a predetermined pattern of ones and zeros which identify a particular function or process to receive the data. The function code 49 addresses a 4k by 1 bit random access memory (RAM) 61 in the bus interface 33 of every unit 22, 23, 24 coupled to the data bus 21 to determine if that unit contains the receiving function by reading a bit from the RAM 61. If the bit addressed by the function code 49 in RAM 61 is read out as a 'one', the transmitted message 39 is accepted and passed to the attached unit. However if the bit addressed by the function code 49 in RAM 61 is read out as a 'zero', then the bus interface 33-N rejects the transmitted composite message 39.

Referring to FIG. 4 there is shown the data bus 21 having the composite message 39 transmitted therealong. The beginning of message signal 41, which is a portion of the composite message 39 is accepted by the bus interfaces 33-2, 33-3 of two of the units 22-2, 22-3 coupled to the data bus 21. The function code 49 is received by each of the bus interfaces 33-2, 33-3 of these units 22-2, 22-3, and applied to separate random access memories 61-2, 61-3. A comparison of the function code 49 in the random access memories 61-2, 61-3 generates output signals which indicate either to accept or reject the transmitted message 39.

When a message 39 is transmitted along the data bus 21, all bus interfaces receive the message and use the function code 49 in the beginning of message signal 41 as a memory address for a memory read operation in the random access memory 61. The programming of a particular RAM 61-2 in a particular bus interface 33-2 determines if that particular bus interface 33-2 accepts or rejects that message 39. For example, the RAMs may be programmed so that all bus interfaces reading a 'zero' reject the message 39 while all bus interfaces reading a 'one' accept and pass the message to its attached unit. Using a 12-bit function code as shown in FIGS. 2 and 4, allows each bus interface unit to recognize up to 4096 functional addresses.

The particular functional addresses which may be recognized by a particular bus interface unit may be changed by transmitting a control message over the data bus 21 or sending a message directly from a user interface to a particular function code RAM. Each word of this control message may contain a function code and a single bit of information which indicates where to accept or reject messages with that function code. The function code in each control word may be used as a memory address for a memory write operation. The particular information bit is then written into the function code RAM. This operation updates the contents of the memory with new routing information. Thus, different functional addresses control which units receive messages as determined by the updated contents of the memory.

The functional addressing technique eliminates the need for the system to maintain a logical-to-physical relationship between the various components coupled to the data bus 21. Functional addressing allows software modules to communicate with other software modules without knowing the physical data processing unit in which a receiving software module resides. Peripheral equipment, such as digital communications interface units, may route received messages to appropriate software modules without knowing which data processing unit does the processing. The functional addressing technique allows for automatic reallocation of computing functions by allowing a function allocating computer to set another data processing unit's bus interface unit to accept all messages assigned to that unit for processing.

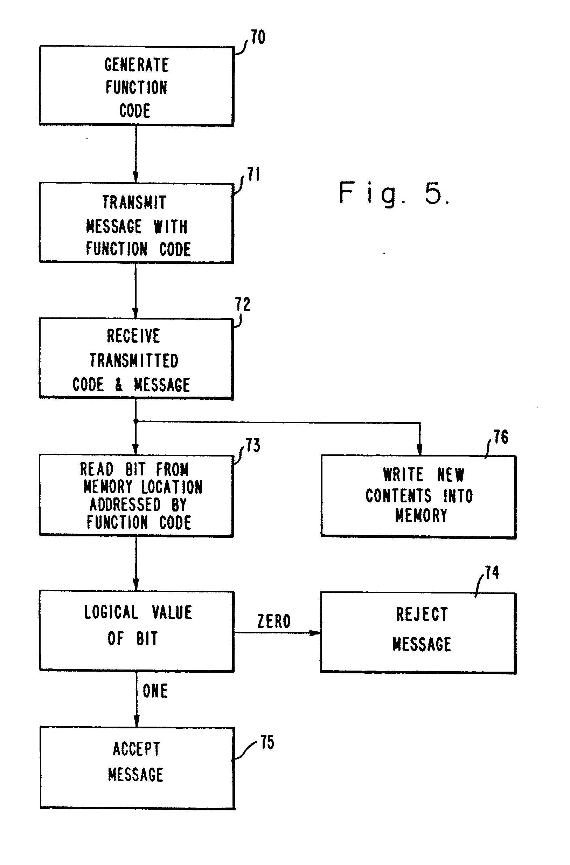

Thus, for the purposes of clarity, and with particular reference to FIG. 5 the method of the present invention comprises the following steps. The first step is to generate a function code, identified by box 70. This function code is then transmitted as a portion of a message along the data bus to all data processing units coupled to the data bus 21, as indicated in box 71. The transmitted function code and message is then received by all units coupled to the data bus 21, as indicated in box 72. The function code is then used as the memory address for a read operation to a random access memory in the bus interface of each unit, as indicated in box 73. If the value read out is a logical 'zero', then the message is rejected by a particular unit, indicated in box 74. However, if the value read out is a logical 'one', then the message is accepted by that particular unit, as indicated in box 75. The contents of the memory may be updated by transmitting a function code indicating a write operation associated with the memory, as indicated in box 76.

Thus, there has been described a functional addressing technique for use with a multiplexed data bus which eliminates the requirement of logical-to-physical relationships between the units coupled to the bus. The functional addressing technique of the present invention also eliminates the need for manual action to reallocate the functions to equipment coupled to the bus or to set up a new logical-to-physical relationship in the newly added units.

## Claims

1. A method of routing messages among a plurality of data processing units (22 - 24) coupled to a serial multiplexed bus (21) via interface means (33), each interface means having a random access memory unit (61), said method comprising:

   generating in a data processing unit a data message (39) comprising control words and data words, the control word forming the beginning of a data message word having a function code (49) at one data processing unit, said function code (49) identifying a data processing function to be performed on the data words in that data message, said function code being indicative of a read operation for said random access memory units;

   transmitting said data message (39) having said function code (49) over said data bus (21);

   simultaneously sensing said data message having said function code in the interface means of all other data processing units as said data message propagates along said bus (21), without removing said data message (39) from said bus (21), distinguishing control words from data words and decoding control words, and monitoring whether a control word is a beginning of message word (BOM);

   providing memory addresses correspondingto said different function codes at each random access memory unit (61) of all interface means;

   providing at each such address in said memory unit (61) an indication of whether the corresponding data processing function is provided by the data processing unit (22 - 24) associated with that memory unit (61);

   utilizing the function code of the sensed data message to address said memory (61) and to obtain said indication of whether the data processing function of that function code is provided by that data processing unit.

2. A method of claim 1, which further comprises the step of:

   transmitting a control word containing a function code indicative of a write operation in said memory (61) which updates said memory (61), said write operation changing the contents of said memory (61) in order to change the routing of messages between data processing units (22 - 24).

3. A data processing system comprising:

   a serial multiplexed data bus (21);

   data processing units (22 - 24) individually coupled to said data bus (21) via interface means (33) at spaced locations for generating data messages (39) to be transmitted to said data bus (21), said interface means sensing data messages (39) propagating along said data bus (21), each data message (39) comprising control words and data words, the control word being a beginning of message word (BOM) containing a function code (49) indicative of a data processing function to be performed on the data contained in said data message, and indicative of a read operation for a random access memory unit (61) contained in each interface means;

means (32) associated with each data processing unit (22 - 24) providing a plurality of function codes (49) indicative of data processing functions performed by each associated data processing unit;

each random access memory unit (61) having addresses corresponding to differing function codes of differing data messages and a memory indication at each memory address location as to whether that data processing function of that memory address is provided by the associated data processing unit; and

means (54) associated with said sensing means (33) utilizing the function code of the sensed data message (39) to address said memory (61) and to obtain said memory indication at that memory address location as to whether the data processing function of that function address is provided by that data processing unit.

4. A data processing system according to claim 3, wherein said interface means (33) couples each data processing unit (22-24) to said data bus (21) to transmit data messages (39) to said data bus (21) and to sense data messages (39) transmitted over said data bus (21) without removing said data messages from said data bus (21).

5. The data processing system of claim 4, comprising in each bus interface means (33): a transmitter portion (59) for transmitting a data message (39) with its function code, generated by the data processing unit (22 - 24) coupled thereto, over said data bus (21); and
    means (50) for sensing a data message (39) propagating over said bus (21) without removing said data message (39) from said data bus (21).

**Revendications**

1. Procédé d'acheminement de messages entre plusieurs unités (22, 24) de traitement de données couplées sur un bus série multiplexé (21) par des moyens d'interface (33), chaque moyen d'interface ayant une unité de mémoire vive (61), ledit procédé comprenant :
    la génération dans une unité de traitement de données d'un message (39) de données comprenant des mots de commande et des mots de données, le mot de commande formant le commencement d'un mot de message de données, ayant un code de fonction (49) à une unité de traitement de données, ledit code de fonction (49) identifiant une fonction de traitement de données à effectuer sur les mots de données dans ce message de données, ledit code de fonction étant représentatif d'une opération de lecture pour lesdites unités à mémoire vive ;
    la transmission dudit message (39) de données ayant ledit code de fonction (49) par ledit bus (21) de données ;
    la détection simultanée dudit message de données ayant ledit code de fonction dans les moyens d'interface de toutes les autres unités de traitement de données pendant que ledit message de données se propage le long dudit bus (21), sans que ledit message (39) de données soit enlevé dudit bus (21) ; la distinction de mots de commande à partir de mots de données et le décodage de mots de commande, et le contrôle pour déterminer si un mot de commande est un mot de début de message (DDM) ;
    à produire des adresses de mémoire correspondant auxdits codes de fonctions différents à chaque unité de mémoire vive (61) de tous les moyens d'interface ;
    à fournir, à chacune de ces adresses dans ladite unité de mémoire (61), une indication pour déterminer si la fonction de traitement de données correspondante est fournie par l'unité (22-24) de traitement de données associée à cette unité (61) de mémoire ;
    l'utilisation du code de fonction du message de données détecté pour adresser ladite mémoire (61) et obtenir ladite indication déterminant si la fonction de traitement de données de ce code de fonction est réalisée par cette unité de traitement de données.

2. Procédé selon la revendication 1, qui comprend en outre l'étape consistant :
    à transmettre un mot de commande contenant un code de fonction représentatif d'une opération d'écriture dans ladite mémoire (61) qui met à jour ladite mémoire (61), ladite opération d'écriture modifiant le contenu de ladite mémoire (61) afin de modifier l'acheminement de messages entre unités de traitement de données (22-24).

3. Système de traitement de données comportant :

un bus de données série multiplexé (21) ;

des unités (22-24) de traitement de données couplées individuellement audit bus (21) de données par des moyens d'interface (33) en des emplacements espacés pour générer des messages de données (39) à transmettre audit bus (21) de données, lesdits moyens d'interface détectant des messages (39) de données se propageant le long dudit bus (21) de données, chaque message de données (39) comportant des mots de commande et des mots de données, le mot de commande étant un mot de début de message (DDM) contenant un code de fonction (49) représentatif d'une fonction de traitement de données à effectuer sur les données contenues dans ledit message de données, et représentatif d'une opération de lecture pour une unité (61) de mémoire vive contenue dans chaque moyen d'interface ;

des moyens (32) associés à chaque unité (22-24) de traitement de données, produisant plusieurs codes de fonctions (49) représentatifs de fonctions de traitement de données effectuées par chaque unité associée de traitement de données ;

chaque unité (61) de mémoire vive ayant des adresses correspondant à des codes de fonctions différents de messages de données différents et une indication de mémoire à chaque emplacement d'adresse de mémoire pour indiquer si une fonction de traitement de données de cette adresse de mémoire est réalisée par l'unité associée de traitement de données ; et

des moyens (54) associés auxdits moyens (33) de détection, utilisant le code de fonction du message de données détecté (39) pour adresser ladite mémoire (61) et pour obtenir ladite indication de mémoire à cet emplacement d'adresse de mémoire afin d'indiquer si la fonction de traitement de données de cette adresse de fonction est réalisée par cette unité de traitement de données.

4. Système de traitement de données selon la revendication 3, dans lequel lesdits moyens d'interface (33) couplent chaque unité (22-24) de traitement de données audit bus (21) de données pour transmettre des messages (39) de données audit bus (21) de données et pour détecter des messages de données (39) transmis par ledit bus (21) de données sans enlever lesdits messages de données dudit bus (21) de données.

5. Système de traitement de données selon la revendication 4, comportant, dans chaque moyen (33) d'interface de bus : une partie à émetteur (59) destinée à transmettre un message (39) de données avec son code de fonction, généré par l'unité (22-24) de traitement de données qui lui est couplée, par ledit bus (21) de données ; et

des moyens (50) destinés à détecter un message (39) de données se propageant sur ledit bus (21) sans enlever ledit message (39) de données dudit bus (21) de données.

**Patentansprüche**

1. Verfahren zum Verbreiten von Nachrichten unter einer Vielzahl von Datenverarbeitungs-Einheiten (22-24), die über Schnittstellen-Einrichtungen (33) mit einem seriellen gemultiplexten Bus gekoppelt sind, wobei jede Schnittstellen-Einrichtung eine Speichereinheit mit wahlfreiem Zugriff (61) aufweist, wobei das Verfahren folgende Schritte umfaßt:

Erzeugen, in einer Datenverarbeitungs-Einheit, eine Datennachricht, die Kontrollwörter und Datenwörter enthält, wobei das jeweilige Kontrollwort den Beginn eines Datennachrichtwortes bildet, das einen Funktionscode (49) bei einer Datenverarbeitungs-Einheit aufweist, wobei der Funktionscode (49) eine an den Datenwörtern in der Datennachricht auszuführende Datenverarbeitungs-Funktion bezeichnet, wobei der Funktionscode einen Lesevorgang für die Speichereinheiten mit wahlfreiem Zugriff angibt;

Übertragen der den Funktionscode (49) aufweisenden Datennachricht (39) über den Datenbus (21);

gleichzeitiges Abfühlen der den Funktionscode aufweisenden Datennachricht in der Schnittstellen-Einrichtung aller anderen Datenverarbeitungs-Einheiten, während sich die Datennachricht entlang des Busses (21) ausbreitet, ohne die Datennachricht (39) von dem Bus (21) zu entfernen, Unterscheiden der Kontrollwörter von den Datenwörtern und Decodieren der Kontrollwörter, und Überwachen, ob ein Kontrollwort ein den Beginn einer Nachricht angebendes Wort (BOM) darstellt;

Bereitstellen von den verschiedenen Funktionscodes entsprechenden Speicheradressen an jeder Speichereinheit (61) mit wahlfreiem Zugriff aller Schnittstellen-Einrichtungen;

Bereitstellen an jeder derartigen Adresse in der Speichereinheit (61) eine Angabe darüber, ob die entsprechende Datenverarbeitungsfunktion von der der betreffenden Speichereinheit (61) zugeordneten Datenverarbeitungs-Einheit (22-24) bereitgestellt wird;

Verwenden des Funktionscodes der erfaßten Datennachricht zur Adressierung des Speichers (61) und zum Erhalten der Angabe darüber, ob die Datenverarbeitungs-Funktion des betreffenden Funktionscodes von der Datenverarbeitungs-Einheit bereitgestellt wird.

2. Verfahren nach Anspruch 1, gekennzeichnet durch die weiteren Schritte:

Übertragen eines Kontrollwortes, das einen einen Schreibvorgang in dem Speicher (61) angebenden Funktionscode enthält, der den Speicher (61) fortschreibt, wobei der Schreibvorgang die Inhalte des Speichers (61) ändert, um das Verzweigen der Nachrichten zwischen den Datenverarbeitungs-Einheiten (22-24) zu ändern.

3. Datenverarbeitungssysteme mit:

einem seriellen gemultiplexten Datenbus (21)

Datenverarbeitungs-Einheiten (22-24), die an beabstandeten Orten über Schnittstellen-Einrichtungen (33) individuell mit dem Datenbus (21) gekoppelt sind, um über den Datenbus (21) zu übertragende Datennachrichten (39) zu erzeugen, wobei die Schnittstellen-Einrichtungen sich entlang des Datenbusses (21) ausbreitende Datennachrichten (39) abfühlen, wobei jede Datennachricht (39) Kontrollwörter und Datenwörter enthält, wobei das jeweilige Kontrollwort ein den Beginn einer jeweiligen Nachricht angebendes Wort (BOM) ist, das einen Funktionscode (49) enthält, der eine an den in der Datennachricht enthaltenden Daten durchzuführende Datenverarbeitungs-Funktion angibt und ferner einen Lesevorgang für eine in jeder Schnittstellen-Einrichtung enthaltene Speichereinheit mit wahlfreiem Zugriff (61) angibt;

eine Einrichtung (32), die jeder Datenverarbeitungs-Einheit (22-24) zugeordnet ist und eine Vielzahl von Funktionscodes (49) liefert, welche die von jeder zugeordneten Datenverarbeitungs-Einheit durchgeführten Datenverarbeitungs-Funktionen angeben;

wobei jede Speichereinheit mit wahlfreiem Zugriff (61) Adressen enthält, die unterschiedlichen Funktionscodes von unterschiedlichen Datennachrichten entsprechen, und an jeder Speicheradress-Stelle eine Speicherangabe darüber, ob die Datenverarbeitungs-Funktion der betreffenden Speicheradresse von der zugeordneten Datenverarbeitungs-Einheit bereitgestellt wird; und

eine Einrichtung (54) die der Fühleinrichtung (33) zugeordnet ist und den Funktionscode der abgefühlten Datennachricht (39) dazu verwendet, den Speicher (61) zu adressieren und an der Speicheradress-Stelle die Speicherangabe darüber zu erhalten, ob die Datenverarbeitungs-Funktion der betreffenden Funktionsadresse von der Datenverarbeitungs-Einheit bereitgestellt wird.

4. Datenverarbeitungssystem nach Anspruch 3, dadurch gekennzeichnet, daß die Schnittstellen-Einrichtung (33) jede Datenverarbeitungs-Einheit (22-24) mit dem Datenbus (21) koppelt, um Datennachrichten (39) auf den Datenbus (21) zu übertragen und um über den Datenbus (21) übertragene Datennachrichten (39) zu erfassen, ohne die Datennachrichten von dem Datenbus (21) zu entfernen.

5. Datenverarbeitungssystem nach Anspruch 4, gekennzeichnet durch

in jeder Bus-Schnittstellen-Einrichtung (33):

einen Übertragungsbereich (59) zum Übertragen einer Datennachricht (39) mit ihrem Funktionscode über den Datenbus (21), die von der daran gekoppelten Datenverarbeitungs-Einheit (22-24) erzeugt wird; und

eine Einrichtung (50) zum Erfassen einer sich über den Bus (21) ausbreitenden Datennachricht (39), ohne die Datennachricht (39) von dem Datenbus (21) zu entfernen.

Fig. 1.

Fig. 3.

Fig. 2.

Fig. 4.

GENERATE
FUNCTION
CODE
70

TRANSMIT
MESSAGE WITH
FUNCTION CODE
71

Fig. 5.

RECEIVE
TRANSMITTED
CODE & MESSAGE
72

READ BIT FROM
MEMORY LOCATION
ADDRESSED BY
FUNCTION CODE
73

WRITE NEW
CONTENTS INTO
MEMORY
76

LOGICAL VALUE
OF BIT
74

ZERO

REJECT
MESSAGE
74

ONE

ACCEPT
MESSAGE
75